# EUROPÄISCHE PATENTANMELDUNG

(11) **EP 1 841 031 A1**
(43) Veröffentlichungstag der Anmeldung: **03.10.2007**
(21) Anmeldenummer: 06006936.6
(22) Anmeldetag: 31.03.2006
(51) Int. Cl.: H02G 5/10

(54) **Hochstrom-Leitungsanordnung und Generatoranlage**

(71) Anmelder: SIEMENS AKTIENGESELLSCHAFT, 80333 München (DE)
(72) Erfinder: Feuerstein, Winfried, 91058 Erlangen (DE); Schreiner, Franz, 93426 Roding (DE)

(57) **Zusammenfassung**

Eine Hochstrom-Leitungsanordnung (10) mit einem in koaxialer Anordnung innerhalb eines Isolatorrohres (14) angeordneten Hochstromleiters (12) soll für den Einsatz in einer Generatoranlage besonders geeignet sein und die zuverlässige Aufrechterhaltung einer Kühlung mit besonders einfach gehaltenen Mitteln ermöglichen. Dazu ist erfindungsgemäß das Hochstrom-Leiterstück (12) mit einem integrierten Kühlmittelkanal (16) versehen.

## Beschreibung

Die Erfindung bezieht sich auf eine Hochstrom-Leitungsanordnung mit einem in koaxialer Anordnung innerhalb eines Hüllrohres angeordneten Hochstrom-Leiterstück. Sie betrifft weiterhin eine Generatoranlage mit einem Generator, der über ein Stromableitungssystem mit einem elektrischen Abnehmer verbunden ist.

Bei der Erzeugung elektrischer Energie in Kraftwerksanlagen werden üblicherweise Generatoren eingesetzt, die ihrerseits von einer geeigneten Antriebsmaschine, beispielsweise einer Turbineneinheit oder dergleichen, angetrieben werden. Durch diesen Antrieb wird im Generator eine Hochspannung erzeugt. Innerhalb einer so genannten Generatoranlage ist der Generator dabei ausgangsseitig über Hochstromverbindungen, die so genannten Generatorableitungen, mit einer Transformatoranlage, auch bezeichnet als Maschinentransformator oder Blocktransformator, verbunden. Über den Transformator erfolgt, gegebenenfalls unter Zwischenschaltung geeigneter weiterer Komponenten, die elektrische Verbindung des Generators mit dem Stromnetz.

Zur Verbindung des Generators mit dem Transformator kommen in einer derartigen Generatoranlage üblicherweise Hochstromverbindungen oder Hochstrom-Leitungsanordnungen zum Einsatz. Die elektrische Verbindung des Generators mit dem Transformator ist dabei üblicherweise einphasig isoliert ausgeführt, wobei für jede der drei Phasen in einem Drehstromsystem eine eigene Hochstrom-Leitungsanordnung vorgesehen ist. Eine derartige Hochstrom-Leitungsanordnung umfasst üblicherweise ein in koaxialer Anordnung innerhalb eines Isolatorrohres angeordnetes Hochstrom-Leiterstück. Eine derartige Kapselung, auch als so genannte Ableitungshülle bezeichnet, wird üblicherweise über Stützeinrichtungen aus Isolierstoff räumlich von dem innerhalb der Ableitungshülle angeordneten Hochstrom-Leiterstück getrennt gehalten, wobei der Hochstromleiter unter Mittelspannung steht und über einen Ringspalt von der auf Erdpotenzial gehaltenen Hülle oder Kapselung getrennt ist.

Je nach Anwendungsfall können in derartigen Hochstrom-Leitungsanordnungen innerhalb von Generatoranlagen sehr hohe Ströme fließen, wobei Stromstärken von bis zu 50.000 A erreicht werden können. Die infolge derartig hoher Stromstärken in Leiter und Hülle entstehende Verlustleistung wird üblicherweise durch Wärmestrahlung und/oder Konvektion an die unmittelbare Umgebung abgegeben. Dabei erfolgt der Wärmeübergang zunächst von dem inneren, vergleichsweise wärmeren Hochstromleiter auf das äußere, vergleichsweise kältere Hüllrohr und von dort an die äußere Umgebung.

Bei nicht allzu hohen Stromstärken, insbesondere bei Generatorableitungen mit Stromstärken von bis zu etwa 25.000 A, kann eine so genannte natürliche Kühlung vorgesehen sein, wobei die Wärmeabfuhr an die Umgebung ohne weitere Maßnahmen erfolgt. Dabei werden üblicherweise bei Spannungswerten von etwa 36 kV typische Hüllendurchmesser von etwa bis zu 1.700 mm erreicht. Um andererseits bei noch höheren Stromstärken von mehr als 25.000 A die üblicherweise zulässigen Maximalwerte der auftretenden Temperaturen (üblicherweise maximal 90°C am Leiter und maximal 70°C am Isolatorrohr) und dennoch begrenzte Baugrößen einhalten zu können, ist üblicherweise für derartige Fälle eine forcierte oder aktive Belüftung für das Ableitungssystem vorgesehen. Derartige Systeme bestehen üblicherweise aus einem geschlossenen Luft-Kühlkreislauf, mit dem eine zusätzliche Kühlung im Ringspalt, das heißt zwischen Leiter und Hülle, des Ableitungssystems erreicht wird. Durch derartige Maßnahmen wird ein Großteil der elektrischen Wärmeverluste über den forcierten Luftstrom abgeführt. Die dabei aufgewärmte Kühlluft wird über einen Wasserkühler rückgekühlt und wieder ins Ableitungssystem eingespeist.

Durch den Einsatz einer derartigen forcierten Belüftung lässt sich üblicherweise die Stromtragfähigkeit des Generatorableitersystems bis zu Werten von etwa 50.000 A steigern.

Für ein derartiges forciertes Belüftungssystem ist üblicherweise vorgesehen, in zwei der drei den jeweiligen Phasen des Drehstromsystems zugeordneten Hochstrom-Leitungsanordnungen die Kühlluft möglichst in der Mitte des Ableitungsverlaufs einzuspeisen und ausgangsseitig die bereits erwärmte Kühlluft dem der dritten Phase zugeordneten Hochstrom-Leitungsanordnung zuzuführen. Über diese wird die erwärmte Kühlluft zur Kühlanlage zurückgeführt. An den Luft-Verbindungsstellen zwischen den jeweiligen Hochstrom-Leitungsanordnungen sind dazu üblicherweise Überströmstücke für die Kühlluft sowie zusätzliche Drosselklappen zur Einstellung des Luftstroms und gegebenenfalls auch Deionisationsgitter installiert. Diese verhindern einen eventuellen Lichtbogen-Übergang im Falle eines Erdschlusses von einer zur anderen Phase.

Durch eine derartige Kühlluftführung ist jedoch die Beaufschlagung der der letztgenannten Phase zugeordneten Hochstrom-Leitungsanordnung mit einem vergleichsweise hohen Kühlluftstrom erforderlich. Die dadurch bedingten Verluste, insbesondere zur Überwindung des im Ableitungssystem vorhandenen Staudrucks, bedingen jedoch eine entsprechend hohe Antriebsleistung zur Aufrechterhaltung des Kühlluftstroms. Sowohl die elektrische Antriebsleistung der Ventilatoren als auch der Einsatz der genannten Drosselklappen und Deionisationsgitter stellen dabei einen unerwünschten konstruktiven und apparativen Mehraufwand dar.

Der Erfindung liegt daher die Aufgabe zugrunde, eine Hochstrom-Leitungsanordnung der oben genannten Art anzugeben, die für den Einsatz in einer Generatoranlage der genannten Art besonders geeignet ist und die zuverlässige Aufrechterhaltung einer Kühlung mit besonders einfach gehaltenen Mitteln ermöglicht.

Diese Aufgabe wird erfindungsgemäß gelöst, indem das innerhalb des Hüllrohres angeordnete Hochstrom-Leiterstück mit einem integrierten Kühlmittelkanal versehen ist.

Die Erfindung geht dabei von der Überlegung aus, dass die zuverlässige Aufrechterhaltung eines Kühlluftstroms mit besonders gering gehaltenem apparativen und operativen Aufwand ermöglicht ist, indem Verlustpotenziale oder -quellen konsequent vermieden werden. Dazu sollten insbesondere auch mögliche Engpassstellen oder dergleichen weitgehend vermieden werden, bei denen infolge der entstehenden Druckverluste mit erhöhten Strömungsverlusten zu rechnen ist. Um dies zu ermöglichen, sollte die Hochstrom-Leitungsanordnung insbesondere im Hinblick auf eine mögliche Verwendung in einem dreiphasigen Ableitungssystem für eine möglichst symmetrische, gleichartige Beaufschlagung von drei Leitungsanordnungen mit Kühlluft ausgestaltet sein. Um dies zu gewährleisten, sollte die Hochstrom-Leitungsanordnung insbesondere derart ausgestaltet sein, dass die Zuführung der Kühlluft in die und die Abführung der Kühlluft aus der Leitungsanordnung nahezu im gleichen räumlichen Bereich erfolgen kann. Dies ist erreichbar, indem der Hochstromleiter mit einem integrierten Kühlmittelkanal versehen ist, so dass der zwischen Isolatorrohr und Hochstrom-Leiterstück gebildete äußere Ringraum zur Durchströmung des Kühlmittels in einer Richtung und der integrierte Kühlmittelkanal in der Art eines Gegenstroms zur Durchströmung des Kühlmittels in der Gegenrichtung geeignet genutzt werden kann.

Vorteilhafterweise weist das Hochstrom-Leiterstück in seinen Endbereichen eine Anzahl von Überströmöffungen auf, über die der Kühlmittelkanal medienseitig mit dem zwischen dem Isolatorrohr und dem Hochstrom-Leiterstück gebildeten Ringraum verbunden ist. Bei einer derartigen Ausgestaltung sind der Ringraum einerseits und der in das Hochstrom-Leiterstück integrierte Kühlmittelkanal andererseits medienseitig über die Überströmöffnungen hintereinander geschaltet.

Vorteilhafterweise ist endseitig des Hochstrom-Leiterstücks jeweils eine Leiterdurchführung zur medienseitigen Abdichtung des zwischen dem Hüllrohr und dem Hochstromleiter gebildeten Ringraums angeordnet.

Die Hochstrom-Leitungsanordnung ist in besonderem Maße zum Einsatz in einer Generatoranlage mit einem Generator, der über ein Stromableitungssystem mit einem elektrischen Abnehmer verbunden ist, geeignet, wobei das Stromableitungssystem vorzugsweise eine Anzahl der genannten Hochstrom-Leitungsanordnungen umfasst. In besonders vorteilhafter Ausgestaltung ist die Generatoranlage dabei für die Erzeugung von drei-phasigem Drehstrom ausgelegt, wobei vorteilhafterweise das Stromableitungssystem zur Bildung eines drei-phasigen Drehstromsystems drei Hochstrom-Leitungsanordnungen der genannten Art umfasst, und wobei jede Hochstrom-Leitungsanordnung jeweils einer Stromphase zugeordnet ist.

Um den apparativen und konstruktiven Aufwand bei der Ausgestaltung des Kühlmittelsystems besonders gering zu halten, sind die Hochstrom-Leitungsanordnungen dabei vorteilhafterweise kühlmittelseitig in einen gemeinsamen Kühlmittelkreislauf geschaltet. In weiterer vorteilhafter Ausgestaltung sind die Hochstrom-Leitungsanordnungen dabei kühlmittelseitig parallel geschaltet. Bei einer derartigen Ausgestaltung kann somit eine besonders homogene und gleichmäßige Beaufschlagung sämtlicher Hochstrom-Leitungsanordnungen mit Kühlmittel erfolgen, so dass unerwünschte Engpässe oder Beiträge zum Druckverlust besonders gering gehalten sind.

Um die je nach Betriebszustand möglicherweise auftretenden thermischen Längenänderungen geeignet kompensieren zu können, sind die Hochstrom-Leitungsanordnungen dabei jeweils zweckmäßigerweise mit integrierten Leiterdehnstellen versehen. Die Leiterdehnstellen umfassen dabei vorzugsweise im Inneren ein zusätzliches luftdichtes, gerolltes Blechkompensator-Rohr. Damit ist die dichte leiterinterne Luftführung sicher aufrecht erhalten, auch wenn mechanische Längsdehnungen des Leiters infolge der Temperatureinwirkungen auf den Leiter im Betrieb toleriert werden.

Vorteilhafterweise sind die integrierten Leiter- oder Kühlmittelkanäle der Hochstrom-Leitungsanordnungen medienseitig mit einem gemeinsamen Kühlmittelsammelraum verbunden, so dass mit besonders einfachen Mitteln und mit gering gehaltenem Aufwand eine zuverlässige medienseitige Parallelschaltung der Kühlmittelkanäle erreichbar ist.

Die mit der Erfindung erzielten Vorteile bestehen insbesondere darin, dass durch den integrierten Leiter-Kühlmittelkanal im Hochstrom-Leiterstück eine besonders wirkungsvolle Kühlmethode im Bereich der Generatorableitung erreichbar ist, wobei eine zuverlässige Kühlung mit forcierter Belüftung auch mit besonders gering gehaltenem Materialeinsatz für Hülle und Leiter gewährleistet ist. In der Gesamtheit des Kühlsystems ist ein besonders gering gehaltenes Kühlluftvolumen erforderlich, so dass entsprechend geringere Luftgeschwindigkeiten und damit kleinere Kühler und kleinere Ventilatoren-Antriebsleistungen erreichbar sind. Darüber hinaus sind gerade im Bereich des Generatoranschlusses und auch im Bereich des Maschinentransformators zwischen den Ableitungshüllen keine Drosselklappen und keine Deionisationsgitter erforderlich, so dass der apparative Aufwand besonders gering gehalten werden kann.

Ein Ausführungsbeispiel der Erfindung wird anhand einer Zeichnung näher erläutert. Darin zeigen:
- FIG 1: eine Generatorableitungsanlage mit einer Anzahl von Hochstrom-Leitungsanordnungen im Längsschnitt,
- FIG 2: die Generatorableitungsanlage nach FIG 1 im Querschnitt,
- FIG 3: ausschnittsweise eine vergrößerte Darstellung einer Hochstrom-Leitungsanordnung der Generatorableitungsanlage nach FIG 1, und
- FIG 4: ebenfalls eine ausschnittsweise Vergrößerung einer Dehnstelle einer Hochstrom-Leitungsanordnung der Generatorableitungsanlage nach FIG 1.

Gleiche Teile sind in allen Figuren mit denselben Bezugszeichen versehen.

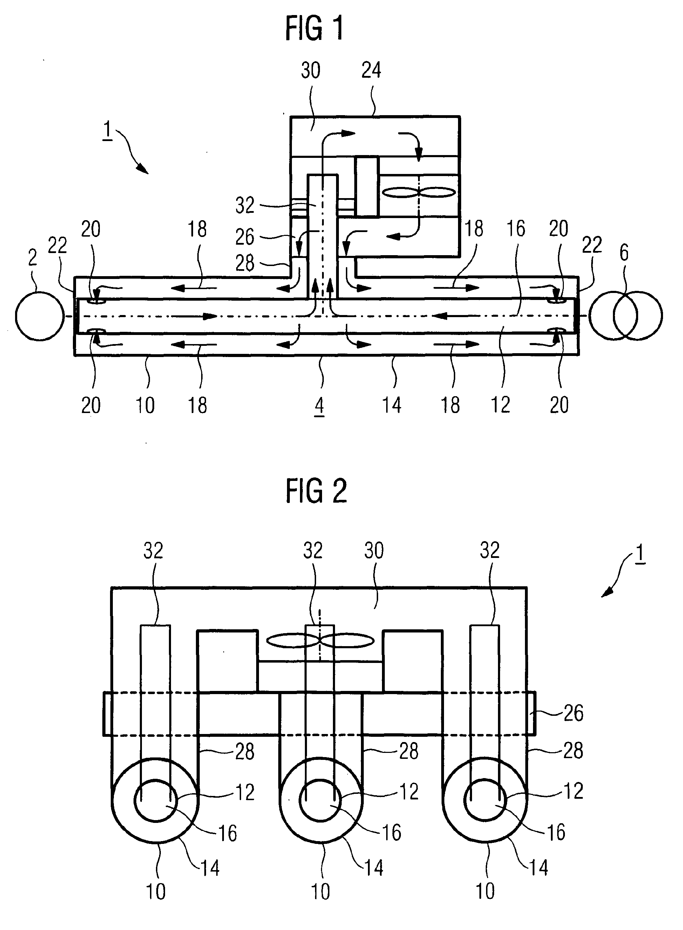

Die Generatoranlage 1 nach FIG 1 umfasst einen Generator 2, der über ein Stromableitungssystem 4 mit einem elektrischen Abnehmer, im Ausführungsbeispiel einem Blocktransformator 6, verbunden ist. Das Stromableitungssystem 4 umfasst dabei im Ausführungsbeispiel zur Bildung eines drei-phasigen Drehstromsystems drei Hochstrom-Leitungsanordnungen 10, von denen in FIG 1 aufgrund der Darstellung im Längsschnitt lediglich eine sichtbar ist. Jede Hochstrom-Leitungsanordnung 10 ist dabei jeweils einer Stromphase des vom Generator 2 gelieferten Drehstroms zugeordnet.

Wie der Darstellung im Querschnitt in FIG 2 entnehmbar ist, sind die drei den einzelnen Stromphasen jeweils zugeordneten Hochstrom-Leitungsanordnungen 10 auf gleicher Höhe angeordnet.

Um einen Einsatz in modernen Kraftwerksanlagen mit vergleichsweise groß bemessenen charakteristischen Leistungswerten zu ermöglichen, sind das Stromableitungssystem 4 und insbesondere die dieses bildenden Hochstrom-Leitungsanordnungen 10 für eine besonders groß gehaltene Stromtragfähigkeit, im Ausführungsbeispiel von bis zu 50.000 A, ausgelegt. Dazu sind unter anderem die Hochstrom-Leitungsanordnungen 10 für eine so genannte forcierte Belüftung konzipiert, bei der zur Abfuhr der entstehenden Verlustwärme eine gezielte Beaufschlagung mit Kühlluft vorgesehen ist. Um dies zu ermöglichen und gleichzeitig die gegebenen Isolationserfordernisse zu erfüllen, sind die Hochstrom-Leitungsanordnungen 10 jeweils in so genannter koaxialer Bauweise ausgeführt, bei der ein Hochstromleiter 12, beispielsweise gefertigt aus Aluminium, in koaxialer Anordnung innerhalb eines auch als Hülle oder Ableitungshülle bezeichneten Isolatorrohres 14 angeordnet ist. Das Isolatorrohr 14 ist dabei jeweils ebenfalls aus Aluminium gefertigt und wird beim Betrieb der Generatoranlage 1 auf Erdpotenzial gehalten.

Zur Kühlung ist während des Betriebs der Generatoranlage 1 eine Beaufschlagung des in jeder Hochstrom-Leitungsanordnung 10 jeweils durch das Hüllrohr 14 und das darin angeordnete Hochstrom-Leiterstück 12 gebildeten Ringraums oder Ringspalts mit Kühlluft vorgesehen. Diese wird über einen Ventilator eingespeist und in einem geschlossenen Kühlmittelkreislauf mit nicht näher dargestelltem Rückkühler geführt, so dass eine zuverlässige Abfuhr der Verlustwärme über die Kühlluft ermöglicht ist.

Das Kühlsystem der Generatoranlage 1 ist dabei für eine besonders zuverlässige Kühlungswirkung bei vergleichsweise einfach gehaltenem konstruktivem und apparativem Aufbauaufwand ausgelegt. Um dies zu ermöglichen und insbesondere Engpässe oder Engstellen im Kühlmittelkreislauf mit damit verbundenen unerwünschten Druckverlusten und dergleichen zu vermeiden, ist das Hochstrom-Leiterstück 12 jeder Hochstrom-Leitungsanordnung 10 jeweils mit einem integrierten Kühlmittelkanal 16 versehen. Wie insbesondere der Darstellung in FIG 1 entnehmbar ist, ist dabei eine Zuspeisung der Kühlluft - wie durch die Pfeile 18 angedeutet - in den äußeren Ringraum zwischen Hüllrohr 14 und Hochstrom-Leiterstück 12 vorgesehen. Im endseitigen Bereich der Hochstrom-Leitungsanordnung 10 weist das Hochstrom-Leiterstück 12 eine Anzahl von Überströmöffnungen 20 auf, über die die Kühlluft in den integrierten Kühlmittelkanal 16 überströmen kann. Endseitig des Hochstrom-Leiterstücks 10 ist dabei jeweils eine Dichtung 22 zur medienseitigen Abdichtung des zwischen dem Hüllrohr 14 und dem Hochstrom-Leiterstück 12 gebildeten Ringraums angeordnet.

Unter anderem ermöglicht diese Ausgestaltung eine Zu- und Abfuhr der Kühlluft in etwa demselben räumlichen Bereich der jeweiligen Hochstrom-Leitungsanordnung 10, wobei im Ausführungsbeispiel eine annähernd mittige oder zentrale Kühlmittelzu- und -abfuhr vorgesehen ist. Dazu sind die Hochstrom-Leitungsanordnungen 10 in ihrem etwa mittigen Bereich mit einem allen Hochstrom-Leitungsanordnungen 10 gemeinsamen Kühlmittelsammler 24 verbunden. Dieser umfasst einerseits einen Verteilerraum 26, der über Zuströmrohre 28 mit dem Ringraum der jeweiligen Hochstrom-Leitungsanordnungen 10 verbunden ist. Über den Verteilerraum 26 gelangt die Kühlluft somit in den Ringraum jeder Hochstrom-Leitungsanordnung 10. Darüber hinaus ist im Kühlmittelsammler 24 ein Kühlmittelsammelraum 30 vorgesehen, der über zentrisch und koaxial durch die Überströmrohre 28 hindurchgeführte Rohrstücke 32 jeweils mit den integrierten Kühlmittelkanälen 16 der Hochstrom-Leitungsanordnungen 10 verbunden ist. Somit ist medienseitig eine Abfuhr der erwärmten, in den integrierten Kühlmittelkanälen 16 zurückströmenden Kühlluft in den Kühlmittelsammelraum 30 des Kühlmittelsammlers 24 erreichbar.

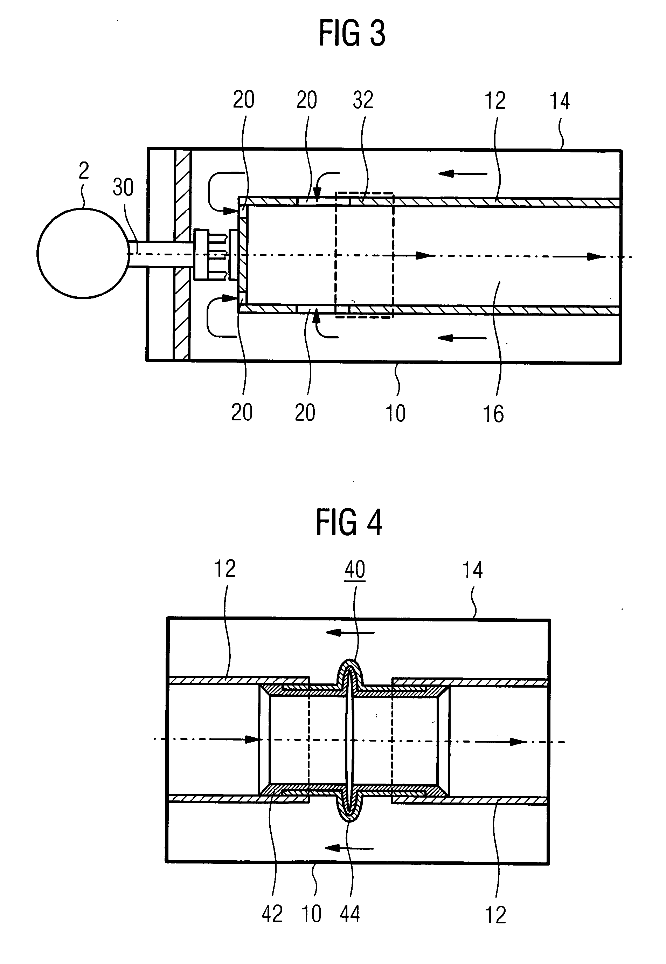

Durch diese Ausgestaltung des-Kühlmittelsystems, insbesondere durch die integrierten Kühlmittelkanäle 16 innerhalb der Hochstrom-Leiterstücke 12, ist somit eine kühlmittelseitig durchgängige Parallelschaltung der Hochstrom-Leitungsanordnungen 10 zueinander erreichbar, so dass eine besonders homogene und gleichmäßige Beaufschlagung sämtlicher Hochstrom-Leitungsanordnungen 10 mit Kühlmittel gewährleistet ist. Unerwünschte Engpässe oder dergleichen sind damit besonders günstig vermieden. Weitere Mittel für eine Quer- oder Rückströmung zwischen den einzelnen Elementen, wie beispielsweise Drosselklappen oder dergleichen, sind dabei nicht erforderlich, so dass eine besonders einfach gehaltene Bauweise erreichbar ist. Wie der vergrößerten Darstellung in FIG 3 entnehmbar ist, wird im Bereich des Anschlusses 30 des Generators 2 die Kühlluft vom Ringspalt zwischen dem Hochstrom-Leiterstück 12 und dem Hüllrohr 14 über die Überströmöffnungen 20 in den integrierten Kühlmittelkanal 16 umgeleitet. Dabei sind einerseits endseitige Überströmöffnungen 20 vorgesehen, über die das Überströmen erfolgen kann. Weiterhin sind zusätzliche Überströmöffnungen 20 vorgesehen, die einem Shutterelement 32 zugeordnet sind. Das Shutterelement 32 ist dabei als entlang des Hochstrom-Leiterstücks 12 führbares Ringelement ausgestaltet, so dass durch geeignete Variation der Positionierung des Shutters 32 die diesem zugeordneten Überströmöffnungen 20 ganz oder teilweise verschlossen werden können. Hiermit ist in besonders einfacher Weise eine Regulierung der Überströmung von Kühlluft in den integrierten Kühlmittelkanal 16 erreichbar.

Wie der vergrößerten Darstellung in FIG 4 entnehmbar ist, können an geeigneten Stellen der Hochstrom-Leitungsanordnungen 10 geeignete Kompensatoreinheiten 40 vorgesehen sein. Durch diese soll eine mechanische Längsdehnung der Leiterelemente infolge von Temperatureinwirkung auf den Leiter im Betrieb geeignet kompensiert werden. Dazu umfasst die Kompensatoranordnung 40 jeweils ein innerhalb des Hochstrom-Leiters 12 geführtes Blech-Kompensationsrohr 42, vorzugsweise hergestellt aus luftdichtem gerolltem Aluminium. Dieses ist umgeben von Dehnbändern 44, vorzugsweise gebildet aus Aluminium. Mechanische Längenänderungen infolge von Temperatureinwirkung können durch eine derartige Einheit geeignet ausgeglichen werden.

## Patentansprüche

1. Hochstrom-Leitungsanordnung (10) mit einem in koaxialer Anordnung innerhalb eines Isolatorrohres (14) angeordneten Hochstrom-Leiterstück (12), das mit einem integrierten Kühlmittelkanal (16) versehen ist.

2. Hochstrom-Leitungsanordnung (10) nach Anspruch 1, dessen Hochstrom-Leiterstück (12) in seinen Endbereichen eine Anzahl von Überströmöffnungen (20) aufweist, über die der Kühlmittelkanal (16) medienseitig mit dem zwischen dem Isolatorrohr (14) und dem Hochstrom-Leiterstück (12) gebildeten Ringraum verbunden ist.

3. Hochstrom-Leitungsanordnung (10) nach Anspruch 1 oder 2, bei dem endseitig des Hochstrom-Leiterstücks (12) jeweils eine Dichtung (22) zur medienseitigen Abdichtung des zwischen dem Hüllrohr (14) und dem Hochstrom-Leiterstück (12) gebildeten Ringraums angeordnet ist.

4. Generatoranlage (1) mit einem Generator (2), der über ein Stromableitungssystem (4) mit einem elektrischen Abnehmer verbunden ist, wobei das Stromableitungssystem (4) eine Anzahl von Hochstrom-Leitungsanordnungen (10) nach einem der Ansprüche 1 bis 3 umfasst.

5. Generatoranlage (1) nach Anspruch 4, deren Stromableitungssystem (4) zur Bildung eines dreiphasigen Drehstromsystems drei Hochstrom-Leitungsanordnungen (10) nach einem der Ansprüche 1 bis 3 umfasst, wobei jede Hochstrom-Leitungsanordnung (10) jeweils einer Stromphase zugeordnet ist.

6. Generatoranlage (1) nach Anspruch 4 oder 5, bei der die Hochstrom-Leitungsanordnungen (10) kühlmittelseitig in einen gemeinsamen Kühlmittelkreislauf geschaltet sind.

7. Generatoranlage (1) nach einem der Ansprüche 4 bis 6, bei der die Hochstrom-Leitungsanordnungen (10) kühlmittelseitig parallel geschaltet sind.

8. Generatoranlage (1) nach einem der Ansprüche 4 bis 7, bei der die integrierten Kühlmittelkanäle (16) der Hochstrom-Leitungsanordnungen (10) medienseitig mit einem gemeinsamen Kühlmittelsammelraum (30) verbunden sind.
